Europäisches Patentamt

European Patent Office

Office européen des brevets

(11) Veröffentlichungsnummer: **0 114 070**
A2

(19)

## (12) EUROPÄISCHE PATENTANMELDUNG

(21) Anmeldenummer: 84100338.7

(22) Anmeldetag: 13.01.84

(51) Int. Cl.³: **C 21 C 5/52**, **F 27 B 3/22**, **C 21 C 5/04**, **F 23 M 11/02**

(30) Priorität: 18.01.83 DE 3301466

(43) Veröffentlichungstag der Anmeldung: 25.07.84 Patentblatt 84/30

(84) Benannte Vertragsstaaten: AT BE CH DE FR GB IT LI LU NL SE

(71) Anmelder: Fuchs Systemtechnik GmbH, Reithallenstrasse 1, D-7601 Willstätt-Legelshurst (DE)

(72) Erfinder: Fuchs, Gerhard, Eschigweg 1, D-7640 Kehl-Bodersweier (DE)
Erfinder: Wabersich, Ernst, Dipl.-Ing., Tulpenweg 13, D-7640 Kehl-Marien (DE)

(74) Vertreter: Blumbach Weser Bergen Kramer Zwirner Hoffmann Patentanwälte, Radeckestrasse 43, D-8000 München 60 (DE)

(54) Brenner bzw. Blasdüse für den Einsatz in einem metallurgischen Ofen und Anordnung in der Wand eines solchen Ofens.

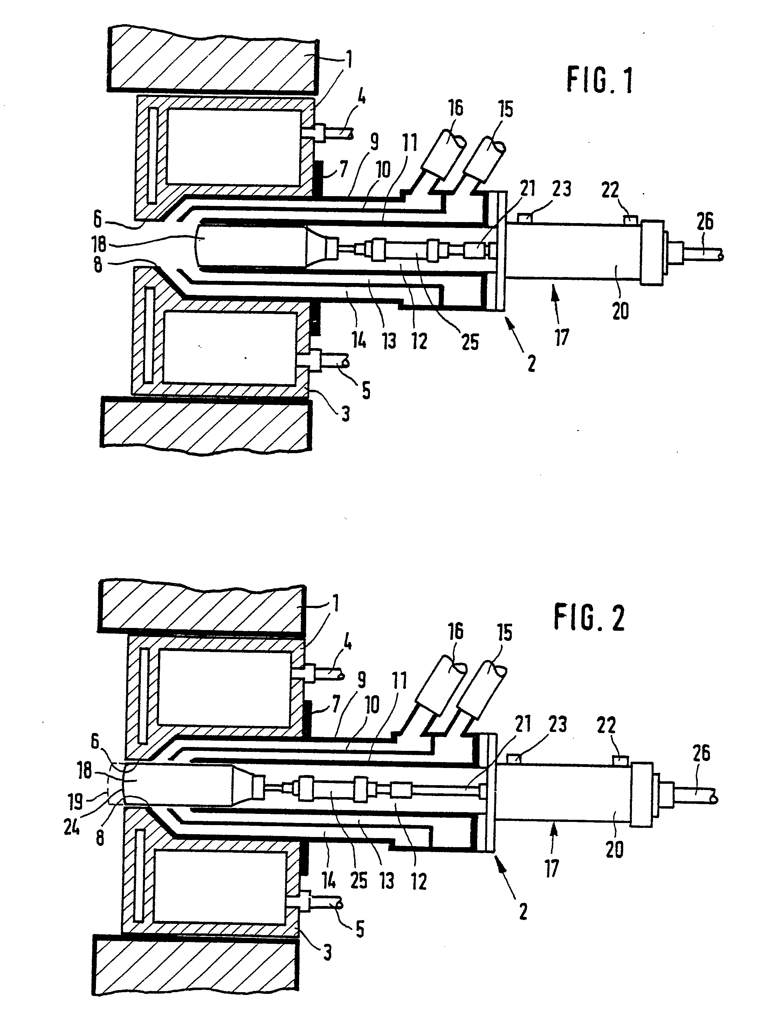

(57) Um bei einem Brenner (2) bzw. einer Blasdüse für den Einsatz in einem metallurgischen Ofen ein Zusetzen der Mündung durch Schlacke- oder Metallspritzer zu verhindern, wird im Bereich der Austrittsöffnung (8) des Brenners bzw. der Blasdüse ein Körper (18) angeordnet, der durch eine Betätigungseinrichtung (17) in eine die Austrittsöffnung bedeckende Schliessstellung verschiebbar ist. Um ein Anhaften von Spritzern an dem verschiebbaren Körper zu verhindern, wird dieser in Schwingungen versetzt und/oder der dem Ofeninneren zugekehrte Teil aus zunderfestem Werkstoff gebildet oder mit schwer benetzbarem Material überzogen. Bei einer Anordnung eines solchen Brenners bzw. einer solchen Blasdüse in der Wand eines metallurgischen Ofens kann durch den Körper auch die Wandöffnung (6) verschliessbar sein (Fig. 2).

0114070

Korf & Fuchs Systemtechnik GmbH
7601 Willstätt-Legelshurst                    83/0102 EPC


Brenner bzw. Blasdüse für den Einsatz in einem metallurgischen Ofen und Anordnung in der Wand eines solchen Ofens

Die Erfindung betrifft einen Brenner bzw. eine Blasdüse gemäß dem Gattungsbegriff des Patentanspruches 1. Sie bezieht sich außerdem auf eine Anordnung gemäß dem Gattungsbegriff des Patentanspruches 15.

Ein Brenner der genannten Art ist beispielsweise durch die DE-AS 2013145 bekanntgeworden. Hier ist im Bereich der Brennerspitze, das heißt im Bereich der Austrittsöffnung des Brenners ein pneumatisch oder hydraulisch betätigbarer Umsteuerschieber vorgesehen, durch den die Zufuhr des Brennstoffes und von Gasen zur Austrittsöffnung des Brenners steuerbar ist.

Beim Einsatz von sogenannten Jet-Brennern für Öl-Sauerstoff oder Brenngas-Sauerstoff in metallurgischen Öfen, insbesondere Elektrolichtbogenöfen, muß die Brennermündung von Metall- und Schlackespritzern freigehalten werden. Besonders in den Brennpausen ist die Verschlackungsgefahr sehr groß. Das gleiche gilt für Blasdüsen zum Einblasen von Sauerstoff oder eines sauerstoffhaltigen Gases in den Ofen.

Um die Verschlackung zu vermeiden, werden die Brenner während der Brennpausen mit Hilfe mechanischer Einrichtungen aus der Ofenwand herausgezogen oder herausgeschwenkt.

Die Einrichtungen sind teuer und störanfällig. Sie erfordern einen hohen Wartungsaufwand. Überdies muß die Wandöffnung vor dem erneuten Einsetzen der Brenner kontrolliert und ggf. von anhaftender Schlacke befreit werden.

Eine andere Methode zum Freihalten der Brennermündung besteht im Durchblasen von Luft während der Brennpausen. Die Wirksamkeit dieses Verfahrens ist besonders dann in Frage gestellt, wenn die Brenner sehr tief unten in der Ofenwand sitzen, d.h., die Öffnungen von Schlacke bespült werden. Außerdem fallen hohe Kosten für die Preßluft an.

Aufgabe der Erfindung ist es, ein Anhaften von Metall- oder Schlackespritzern an der Austrittsöffnung des Brenners bzw. der Blasdüse bzw. an der Wandöffnung für den Brenner bzw. die Blasdüse weitgehend zu verhindern und etwa anhaftende Spritzer in diesem Bereich wieder zu beseitigen, ohne daß der Brenner bzw. die Blasdüse während der Betriebspausen entfernt oder die Austrittsöffnung durch Preßluft freigehalten werden muß. Es sollen auch tiefsitzende Brenner bzw. Blasdüsen fest in der Ofenwand installiert werden können, ohne daß es zu Betriebsstörungen durch anhaftendes Metall oder Schlacke im Bereich der Brennerspitze kommt.

Die Aufgabe ist durch die Merkmale des Anspruches 1 bzw. des Anspruches 15 gelöst. Vorteilhafte Ausgestaltungen der Erfindung sind den übrigen Ansprüchen zu entnehmen.

Bei dem Brenner bzw. der Blasdüse nach der Erfindung ist dessen Austrittsöffnung bzw. die Öffnung der Ofenwand, in der der Brenner bzw. die Blasdüse eingesetzt ist, mittels eines verschiebbaren Körpers verschließbar. Damit können während der Betriebspausen Metall- und Schlackespritzer nicht mehr in die Mündung des Brenners bzw. der Blasdüse gelangen und Betriebsstörungen verursachen, sondern sie treffen auf den die betreffende Öffnung abschließenden Körper. Dieser ist in dem dem Ofeninneren zugekehrten Bereich aus zunderfestem Werkstoff gebildet und ggf. mit einem schwerbenetzbaren Material wie Graphit überzogen, um das Anhaften von Metall- und Schlackespritzern zu erschweren. Vorzugsweise wird der Körper aber auch in diesem Bereich in Schwingungen versetzt, die auftreffende Spritzer sofort abschleudern. Hierfür sind bei einem kolbenförmigen parallel zur Brenner- bzw. Düsenachse verschiebbaren Körper insbesondere longitudinale Schwingungen geeignet. Es können aber auch transversale oder gemischte Schwingungen zur Anwendung kommen.

Es kann der gesamte Körper in Schwingungen versetzt werden, wobei sich ein mechanischer Schwingungserzeuger, ein elektromechanischer Schwingungserzeuger, ein hydraulisch oder pneumatisch betätigter Schwingungserzeuger zur Erzeugung der Schwingungen eignen. Wesentlich ist jedoch, die Oberfläche des Körpers in Schwingungen zu versetzen, auf die die Metall- oder Schlackespritzer auftreffen können. Deshalb genügt es, wenn diese Oberfläche diese Schwingungen ausführt. Dies ist insbesondere dann von Bedeutung, wenn Ultraschallschwingungserzeuger verwendet werden, bei denen durch die Formgebung des Körpers der Ort der Schwingungsamplituden innerhalb des Körpers beeinflußt wird. Die Schwingungsamplitude soll sich im Bereich der Aufprallfläche der Spritzer befinden. Es ist also anzustreben, die Form und die Massenverteilung des Körpers so zu wählen, daß eine Optimierung der Schwingungs- bzw. Schallfeldgröße erreicht wird, das heißt, die Eigenfrequenz des Körpers und die Schwingungsmoden innerhalb des Körpers auf die Frequenz des Schwingungserzeugers abgestimmt sind.

Vorzugsweise werden der verschiebbare Körper und der Schwingungserzeuger hinsichtlich Ausbildung und Frequenz, insbesondere im Schall- oder Ultraschallwellenbereich, so aufeinander abgestimmt, daß Schall- oder Ultraschallwellen mit so hoher Energie von der Oberfläche des Körpers abgestrahlt werden, daß in dem in Richtung auf das Ofeninnere davorliegenden Raum Schlacke so in Schwingungen versetzt wird, daß sie zerfällt oder weggeschleudert wird.

Eine Beseitigung anhaftender Schlacketeilchen oder einer Schlackeschicht im Bereich oder vor der Düsenmündung läßt sich ggf. kombiniert mit einer Schall- oder Ultraschallabstrahlung auch dadurch erreichen, daß mittels der Betätigungseinrichtung für den verschiebbaren Körper dieser über die Brenner- bzw. Düsenmündung hinaus verschoben und während dieser Schubbewegung anhaftende Metall- oder Schlacketeilchen mechanisch entfernt oder eine Schlackeschicht durchstoßen wird. Der Körper wirkt in diesem Fall wie ein Stößel oder Räumgerät, durch das der Brenner oder die Öffnung in der Ofenwand entweder in jeder Betriebspause automatisch oder auch gesteuert während des Betriebs von anhaftenden Fremdteilchen befreit werden kann.

Die Erfindung wird durch vier Ausführungsbeispiele anhand von fünf Figuren näher erläutert. Es zeigen:

Fig. 1   in schematischer Ansicht einen in der Seitenwand eines metallurgischen Ofens angeordneten Brenner im Betriebszustand,

Fig. 2   den gleichen Brenner während der Betriebspause,

Fig. 3   einen Brenner entsprechend Fig. 2, bei dem anstelle eines hydraulischen ein elektromagnetischer Schwingungserzeuger vorgesehen ist,

Fig. 4   einen Brenner entsprechend Fig. 2, bei dem anstelle eines hydraulischen ein Ultraschallschwingungserzeuger vorgesehen ist,

Fig. 5    die Anordnung eines Brenners bzw. einer Blasdüse in der Seitenwand eines metallurgischen
Ofens, bei der der Verschluß der Wandöffnung in umgekehrter Richtung wie bei den Beispielen nach den Fig. 1 bis 4 erfolgt.

Gemäß Fig. 1 ist in der Seitenwand 1 eines metallurgischen Ofens, wie einem Siemens-Martin-Ofen, einem Konverter,
einem Einschmelzvergaser, einem Lichtbogenofen etc. oberhalb des Schmelzspiegels ein Brenner bzw. eine Blasdüse 2
angeordnet. Der Brenner sitzt in einem Wasserkühlkasten 3,
der wiederum in die feuerfeste Ausmauerung des Ofens eingesetzt ist. Mit 4 ist der Wasserzulauf und mit 5 der
Wasserrücklauf des Wasserkühlkastens 3 bezeichnet. Der
Wasserkühlkasten 3 bildet einen Teil der Wand 1 des metallurgischen Ofens und weist eine Wandöffnung 6 auf, durch
die das Brennstoffgemisch bzw. die Gase des Brenners bzw.
der Blasdüse in das Innere des Ofens eintreten. Der
Brenner ist mittels eines Flansches 7 so am Wasserkühlkasten 3 befestigt, daß sich die Austrittsöffnung 8 des
Brenners unmittelbar an die Wandöffnung 6 anschließt, und
im vorliegenden Fall auch den gleichen Querschnitt wie
die Wandöffnung 6 aufweist. Der Brenner 2 ist in bekannter
Weise aus drei konzentrischen Rohren 9, 10 und 11 aufgebaut, wodurch ein zentraler Kanal 12 und zwei Ringkanäle
13 und 14 gebildet werden. Dem inneren Ringkanal 13 kann
über einen Anschluß 15 ein Brennstoff, wie Brenngas, und
dem äußeren Ringkanal 14 über einen Anschluß 16 ein sauerstoffhaltiges Gas, wie Sauerstoff, zugeführt werden. Bei bekannten Brennern wird üblicherweise auch der zentrale Kanal 12 für die Zufuhr von Brenngas oder Sauerstoff benutzt und bei Blasdüsen wird in der Regel durch den zentralen Kanal 12 Sauerstoff und durch die Ringkanäle 13 und 14
ein Schutzfluid eingeleitet. Im vorliegenden Fall ist
dem Brenner 2 ein mittels einer Betätigungseinrichtung
17 verschiebbarer Körper 18 zugeordnet. Der Körper 18
ist kolbenförmig ausgebildet und im zentralen Kanal 12 des Brenners 2, dessen Querschnitt etwa mit der Austrittsöffnung 8 und mit der Wandöffnung 6 übereinstimmt, axial verschiebbar. Der Körper 18 kann mittels der Betätigungseinrichtung 17 von der in Fig. 1 dargestellten zurückgezogenen Position in die in Fig. 2 mit einer ausgezogenen Linie 24 oder in die in Fig.2 durch eine gestrichelte Linie dargestellte Position 19 geschoben werden. In beiden in Fig. 2 dargestellten Positionen verschließt der Körper 18 die Wandöffnung 6 und verhindert so, daß sich innerhalb der Wandöffnung 6 Metall- oder Schlackespritzer festsetzen können. Etwa in der Wandöffnung 6 bereits anhaftende Metall- oder Schlackespritzer werden beim Ausfahren des kolbenförmigen Körpers 18 aus der zurückgezogenen Position (Fig. 1) in die Schließstellung (Fig. 2) entfernt, da der Außenquerschnitt an der Stirnseite des Körpers 18 nahezu dem Querschnitt der Wandöffnung 6 entspricht. Es soll an dieser Stelle jedoch bermerkt werden; daß der Körper 18 nicht die Aufgabe hat, die Brennstoff- bzw. Gaszufuhr des Brenners zu unterbrechen - dies geschieht durch nicht dargestellte Ventile in den Zuleitungen zu den Anschlüssen 15 und 16 -, sondern die Aufgabe, die Wandöffnung 6 auszufüllen bzw. gegenüber dem Ofeninnenraum abzudecken und bei der Vorwärtsbewegung wie ein Räumwerkzeug bereits in der Wandöffnung anhaftende Spritzer zu entfernen. Durch weiteres Hinausschieben des Körpers 18 in den Ofeninnenraum - gestrichelt dargestellte Position 19 des Körpers 18 in Fig. 2 - können auch noch Schlacketeilchen oder eine Schlackeschicht vor der Wandöffnung 6 entfernt bzw. durchstoßen werden.

Bei der Ausführungsform nach den Fig. 1 und 2 münden die beiden Ringkanäle 13 und 14 vor der Austrittsöffnung 8 des Brenners 2 in den zentralen Kanal 12. Dadurch werden die verschiedenen Austrittsöffnungen der Ringkanäle 13 und 14 zu einer einzigen Austrittsöffnung 8 des Brenners zusammengeführt, die in der Schließstellung des Körpers 18 ebenso wie die Wandöffnung verschlossen wird. Eine solche Ausbil-

7

dung erscheint insbesondere dann zweckmäßig, wenn die Brennermündung unmittelbar der Ofenatmosphäre ausgesetzt ist, sich also an die Austrittsöffnung 8 keine Wandöffnung 6 eines Wasserkühlkastens oder dergleichen anschließt.

Die Betätigungseinrichtung 17 ist bei dem beschriebenen Beispiel als pneumatischer, in zwei Richtungen wirkender Schubantrieb ausgebildet. Zu diesem Zweck ist innerhalb eines Pneumatikzylinders 20 ein nicht dargestellter Kolben verschiebbar, der durch eine Kolbenstange 21 mit dem Körper 18 in Verbindung steht. Der Pneumatikzylinder enthält Druckluftanschlüsse 22 und 23, die auf verschiedenen Seiten des Kolbens in den Pneumatikzylinder 20 münden. Hierdurch ist eine Hin- und Herbewegung des Kolbens und damit des Körpers 18 zwischen den in den Figuren 1 und 2 dargestellten Positionen möglich. Die in Fig. 2 gestrichelt dargestellte Position 19 kann entweder alternativ oder zusätzlich zu der mit einer ausgezogenen Linie dargestellten Position 24 vorgesehen sein. Der Pneumatikzylinder 20 soll so bemessen sein, daß der Körper 18 beim Ausfahren aus der zurückgezogenen Position in die Schließposition anhaftende Metall- bzw. Schlackespritzer wie ein Stößel abschlagen und bei einem Verschieben des Körpers 18 in die Position 19 eine vor der Wandöffnung 6 gebildete Schlackeschicht durchschlagen kann.

Da in der Schließstellung des Körpers 18 ein Teil seiner Oberfläche dem Einwirkungsbereich von Metall- und Schlackespritzern ausgesetzt ist, ist es vorteilhaft, wenn Maßnahmen vorgesehen werden, um das Anhaften solcher Spritzer an dieser Stelle zu erschweren. Dies geschieht gemäß einer Weiterbildung der Erfindung dadurch, daß der betreffende Teil des Körpers, das heißt, die in der Schließstellung dem Einwirkungsbereich der Metall- oder Schlackespritzer ausgesetzte Oberfläche mittels eines Schwingungserzeugers 25 in Schwingungen versetzt wird. Durch die Wahl der Schwingungsform und der Frequenz kann die dem Ofeninneren zugewandte Oberfläche des Körpers 18 weitgehend oder ganz von Schlacke freigehalten werden. Alternativ oder, um diesen Effekt noch zu verstärken, kann die betreffende Oberfläche des Körpers 18 auch aus einem hochwarmfesten, zunderbeständigen Werkstoff hergestellt oder mit einem solchen Werkstoff überzogen sein. Die Oberfläche wird bewußt nicht gekühlt, so daß sie durch die Ofenhitze auf eine hohe Temperatur aufgeheizt wird, weil bei höherer Temperatur die Schlacke infolge der geringeren Viskosität leichter abläuft bzw. durch die schwingende Oberfläche des Körpers 18 leichter abgeschleudert werden kann. Als zunderbeständige Werkstoffe eignen sich Chromnickelstähle, Nickellegierungen, keramische Werkstoffe oder Graphit. Es ist auch vorteilhaft, die dem Einwirkungsbereich von Metall- und Schlackespritzern ausgesetzte Oberfläche des Körpers 18 mit einem schwer benetzbaren Material zu überziehen. Hierfür eignet sich insbesondere Graphit. Wenn eine Überhitzung des Körpers 18 zu befürchten ist, ist es zweckmäßig, diesen zu kühlen.

Der Schwingungserzeuger 25 ist bei dem Ausführungsbeispiel nach den Fig. 1 und 2 als pneumatischer Schwingungserzeuger ausgebildet, der bei dem Beispiel mit einer Frequenz von 1 Hz arbeitet und hierbei den Körper 18 in axiale Schwingungen eines Hubs von 15 mm versetzt. Um dem Schwingungserzeuger 25 die erforderliche Druckluft zuführen zu können, ist die Kolbenstange 21 hohl ausgebildet. Der zentrale Kanal dieser Kolbenstange steht mit einem Anschluß 26 für die Druckluft in Verbindung.

Der beschriebene Brenner arbeitet in der folgenden Weise:

Während der Brennpause ist die Zufuhr des Brenngases und des Sauerstoffes zu den Anschlüssen 15 und 16 unterbrochen, der Körper 18 befindet sich in der in Fig. 2 dargestellten Position 24 und führt um diese Position Axialschwingungen aus, die durch den pneumatischen Schwingungserzeuger 25 hervorgerufen werden, der wiederum über den Anschluß 26 pulsierend mit Druckluft beaufschlagt wird.
Bei Inbetriebnahme des Brenners wird über die Anschlüsse
15 und 16 Brenngas und Sauerstoff zugeführt und gleichzeitig durch die pneumatische Betätigungseinrichtung 17
der Körper 18 in die in Fig. 1 dargestellte Position zurückgezogen. Außerdem wird die Zufuhr von Druckluft zum
Schwingungserzeuger 25 unterbrochen. Durch das mit hoher
Geschwindigkeit austretende Brenngas-Sauerstoff-Gemisch
wird die Brennermündung während des Brennbetriebs weitgehend freigehalten. Sollte es dennoch zu einem Anhaften
von Metall- oder Schlacketeilchen im Bereich der Wandöffnung 6 während des Brennbetriebs kommen, dann lassen
sich diese Teilchen durch den als Stößel wirkenden Körper 18 wieder beseitigen, wenn dieser mittels der pneumatischen Schubvorrichtung 17 in die in Fig. 2 dargestellte Position geschoben wird. Dies erfolgt am Ende des
Brennbetriebs.Eine solche Verschiebebewegung kann aber auch
zur Reinigung der Öffnung während des Brennbetriebs vorgenommen werden, dann muß jedoch für diese Zeit die Zufuhr
der Brenngase unterbrochen werden.

Es kann insbesondere beim Betrieb eines Lichtbogenofens
vorkommen, daß während der Pause des Brenners eine größere
Schlackenmenge vor die Brenneröffnung , das heißt im vorliegenden Fall,vor die Wandöffnung 6 schwappt. In diesem
Fall kann die Öffnung von einer glockenförmigen Schlackeschicht verschlossen werden. Durch Herausschieben des
Körpers 18 in die gestrichelt dargestellte Position 19
mittels der pneumatischen Betätigungseinrichtung 17, läßt
sich diese Schlackeschicht zerstören und die Öffnung wieder freimachen. Eine andere Methode besteht darin, die
Schlackenschicht durch eine Schall- oder Ultraschallschwingung anzuregen und zum Zusammenfallen zu bringen. Dies
kann beispielsweise durch die Brennerausführung nach Fig.
4 erreicht werden.

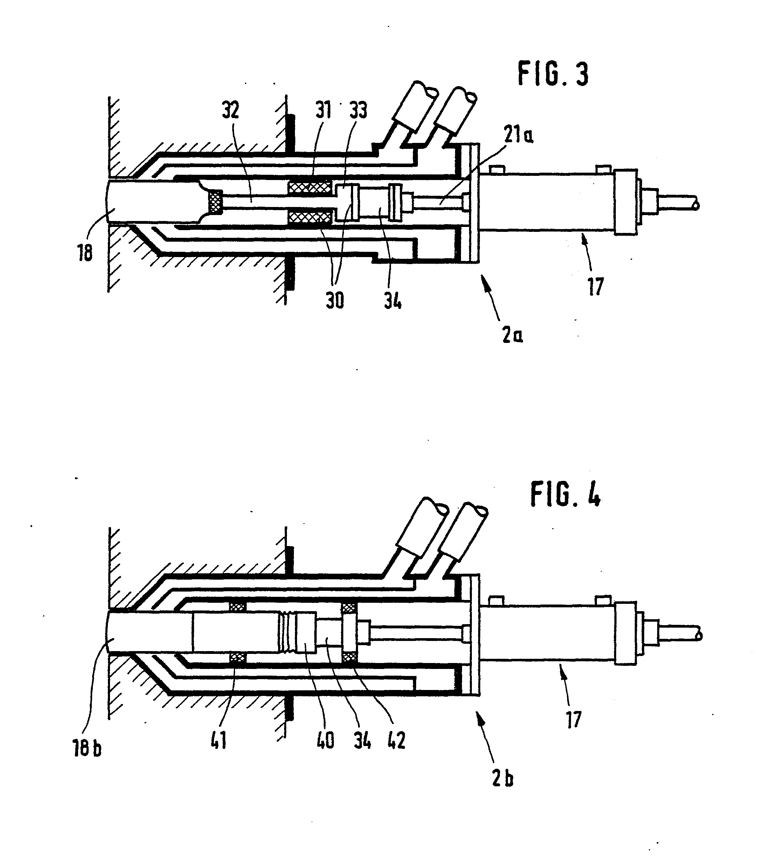

Die Brennerausführungen nach den Figuren 3 und 4 unterscheiden sich von der Brennerausführung nach den Figuren

- 10 -

1 und 2 durch jeweils eine andere Ausbildung des Schwingungserzeugers. Bei der Ausführungsform nach Fig. 3 ist der hydraulische Schwingungserzeuger 25 der Ausführung nach den Figuren 1 und 2 durch einen elektromagnetischen Schwingungserzuger 30 ersetzt. Innerhalb des zentralen Kanals 12 des Brenners 2a ist eine Spule 31 befestigt, durch die eine Verbindungsstange 32 zum Körper 18 hindurchgeführt ist. Diese Verbindungsstange 32 weist auf der der Betätigungseinrichtung 17 zugewandten Seite der Spule 31 einen Anker 33 auf. Der Anker 33 ist über eine elastische Kupplung 34 mit der Kolbenstange 21a der Betätigungseinrichtung 17 verbunden. In der in Fig. 3 dargestellten Schließstellung des Körpers 18 befindet sich der Anker 33 in der Nähe der Stirnseite der Spule 31, so daß er bei Speisung der Spule 31 mit Wechselstrom durch magnetische Anziehung in Schwingungen versetzt werden kann. Diese Schwingungen werden auf den Körper 18 als axiale Schwingungen übertragen und sind durch die elastische Kupplung 34 gegenüber der Betätigungseinrichtung 17 weitgehend entkoppelt. Durch geeignete Form und Massenverteilung der in Schwingung zu versetzenden Teile ist es möglich, diese bei der gewünschten Frequenz in einen Resonanzzustand zu versetzen. Wesentlich ist hierbei, daß ein Schwingungsmaximum an der der Ofenatmosphäre ausgesetzten Oberfläche des Körpers 18 entsteht. Dem Körper 18 kann aber auch eine Schwingung außerhalb seiner Resonanzfrequenz aufgezwungen werden. Bei einem elektromagnetischen Schwingungserzeuger ist es zweckmäßig, die vorhandene Netzfrequenz auszunutzen, d.h. den Körper 18 mit einer Frequenz von 60 oder 120 Hz in Schwingungen zu versetzen.

Bei dem Brenner 2b nach Fig. 4 ist als Schwingungserzeuger ein Ultraschallschwinger 40 vorgesehen. Dies kann beispielsweise ein Quarzschwinger sein. Durch diesen wird der Körper 18b zu einer Longitudinalschwingung angeregt. An der Stelle eines Schwingungsknotens ist ein Ringlager 41 vorgesehen. Auch hier sind die Form und die Massenverteilung so gewählt, daß sich an der dem Ofeninneren zugekehrten Oberfläche des

11

Körpers 18b ein Schwingungsmaximum befindet. Diese schwingende Oberfläche wirkt gleichzeitig als Ultraschallstrahler. Durch die abgestrahlte Energie kann eine davorliegende Schlackenschicht angeregt und zum Zerfall gebracht werden.

Wie bei der Ausführungsform nach Fig. 3 ist der Schwinger durch eine elastische Kupplung gegenüber der Betätigungseinrichtung 17 entkoppelt. Mit 42 ist ein Gleitring bezeichnet, durch den die Lage des axialverschiebbaren Körpers 18b in Verbindung mit dem Ringlager 41 definiert wird.

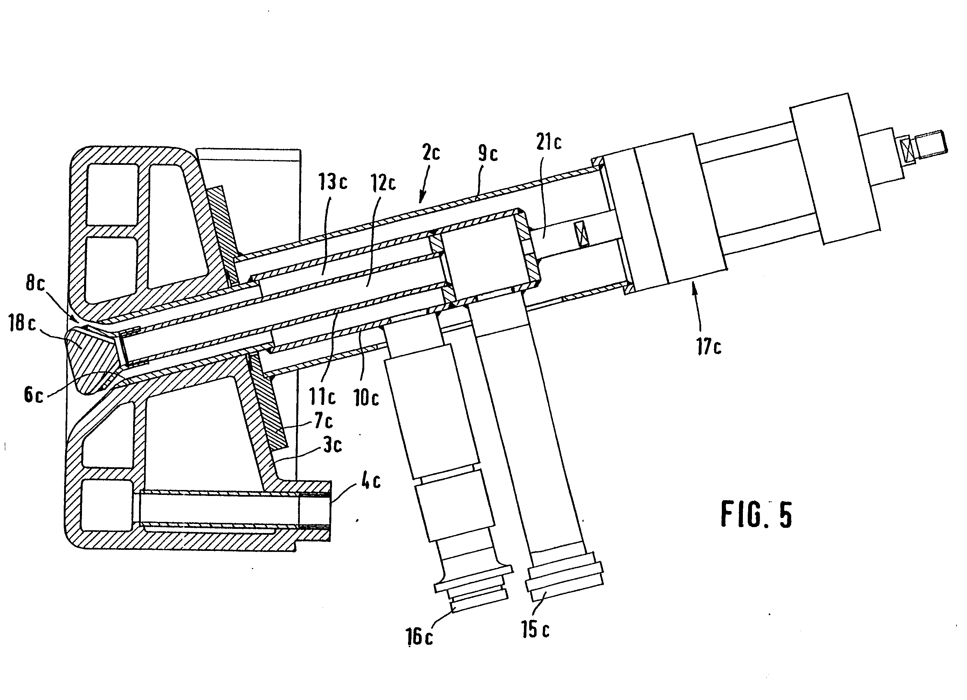

Bei dem in Fig. 5 dargestellten Ausführungsbeispiel ist der Brenner 2c als sogenannter Trompetenbrenner ausgebildet, der dann eingesetzt wird, wenn ein breiter, weniger tiefer Bereich erhitzt werden soll. Der Brenner ist mittels eines Flansches 7c an einem Wasserkühlkasten 3c mit einem Wasserzulauf 4c befestigt, der wiederum in die Seitenwand eines metallurgischen Ofens eingesetzt ist. Die Brennerachse ist bei diesem Ausführungsbeispiel nach unten geneigt. Der Brenner ist auch hier aus drei konzentrischen Rohren 9c, 10c und 11c aufgebaut, wobei das äußere Rohr 9c hier die Aufgabe übernimmt, die Betätigungseinrichtung 17c für den verschiebbaren Körper 18c zu stützen. Durch die konzentrischen Rohre 10c und 11c werden ein zentraler Kanal 12c für die Zufuhr des Brenngases und ein Ringkanal 13c für die Zufuhr des Sauerstoffes gebildet. In diese Kanäle münden die Anschlüsse 15c und 16c für das Brenngas und den Sauerstoff. Abweichend zu den vorher beschriebenen Figuren ist hier nicht nur der Körper 18c innerhalb des Brenners axial verschiebbar, sondern es sind zusammen mit diesem Körper 18c die konzentrischen Rohre 10c und 11c axial verschiebbar. Der Körper 18c, der im vorliegenden Fall so ausgebildet ist, daß er die Gasströme spreizt, ist fest auf das innere Rohr 11c geschraubt und das innere Rohr 11c ist wiederum fest mit dem mittleren Rohr 10c verbunden. Diese Rohre sind zusammen mit dem Körper 18c sowie den Rohranschlüssen 15c und 16c mittels der Betätigungsstange 21c axial verschiebbar, und zwar aus der in Fig. 5 dargestellten Position nach rechts bis der Körper 18c die Wandöffnung 6c verschließt und damit die Austrittsöffnungen 8c für das Brenngas und den Sauerstoff vor Schlackespritzern schützt. Dieses Beispiel soll zeigen, daß vielseitige Abwandlungen im Rahmen der Erfindung möglich sind.

Obwohl die Erfindung anhand von Brennern erläutert worden ist, bei denen als Brennstoff ein Brenngas verwendet wird, sind die erfindungsgemäßen Maßnahmen selbstverständlich auch bei Brennern anwendbar, die mit einem flüssigen Brennstoff wie Öl oder einem in einem Trägergas suspendierten, festen Brennstoff in feinteiliger Form arbeiten. Anstelle von Sauerstoff können sauerstoffhaltige Gase wie Luft verwendet werden.

0114070

1

83/0102 EPC

Patentansprüche

1. Brenner (2, 2a, 2b, 2c) bzw. Blasdüse für den Einsatz
in einem metallurgischen Ofen, insbesondere in einem
Lichtbogenschmelzofen, oberhalb des Schmelzspiegels
mit einem mittels einer Betätigungseinrichtung (17,
17c) verschiebbaren Körper (18, 18b, 18c) im Bereich
der Austrittsöffnung (8, 8c) des Brenners bzw. der
Blasdüse, dadurch gekennzeichnet, daß der Körper
(18, 18b, 18c) durch die Betätigungseinrichtung (17,
17c) in eine die Austrittsöffnung (8, 8c) bedeckende
Schließstellung verschiebbar ist.

2. Brenner bzw. Blasdüse nach Anspruch 1, dadurch gekennzeichnet, daß in der Schließstellung der die Austrittsöffnung (8) bedeckende Teil des Körpers (18, 18b) mittels eines Schwingungserzeugers (25, 30, 40) in Schwingungen versetzbar ist.

3. Brenner bzw. Blasdüse nach Anspruch 1 oder 2, dadurch gekennzeichnet, daß der Körper (18, 18b) durch
einen in zwei entgegengesetzten Richtungen wirkenden
Schubantrieb (17, 17c) innerhalb des Brenners bzw.
der Blasdüse axial verschiebbar ist.

4. Brenner bzw. Blasdüse nach Anspruch 3, dadurch gekennzeichnet, daß der Körper (18, 18b) über die Austrittsöffnung (8) hinaus verschiebbar ist.

5. Brenner bzw. Blasdüse nach einem der Ansprüche 1 bis 4, dadurch gekennzeichnet, daß der Körper als Kolben (18, 18b) ausgebildet ist.

6. Brenner bzw. Blasdüse nach einem der Ansprüche 1 bis 5, dadurch gekennzeichnet, daß der Körper als Stößel (18, 18b) ausgebildet ist.

7. Brenner bzw. Blasdüse nach einem der Ansprüche 1 bis 6, dadurch gekennzeichnet, daß die Betätigungseinrichtung als Pneumatikantrieb (17) ausgebildet ist:

8. Brenner bzw. Blasdüse nach einem der Ansprüche 2 bis 7, dadurch gekennzeichnet, daß der Schwingungserzeuger als Ultraschallschwingungserzeuger (40) ausgebildet ist.

9. Brenner bzw. Blasdüse nach einem der Ansprüche 2 bis 7, dadurch gekennzeichnet, daß der Schwingungserzeuger als elektromagnetischer Schwingungserzeuger (30) ausgebildet ist.

10. Brenner bzw. Blasdüse nach einem der Ansprüche 2 bis 7, dadurch gekennzeichnet, daß der Schwingungserzeuger als mechanischer Schwingungserzeuger ausgebildet ist.

3

11. Brenner bzw. Blasdüse nach einem der Ansprüche 1 bis 10, dadurch gekennzeichnet, daß der dem Ofeninneren zugekehrte Teil des Körpers (18, 18b) aus einem zunderfesten Werkstoff besteht.

12. Brenner bzw. Blasdüse nach einem der Ansprüche 1 bis 11, dadurch gekennzeichnet, daß der dem Ofeninneren zugekehrte Teil des Körpers (18, 18b) mit einem schwer benetzbaren Material überzogen ist.

13. Brenner bzw. Blasdüse nach einem der Ansprüche 1 bis 12, dadurch gekennzeichnet, daß bei einem Aufbau aus wenigstens zwei konzentrischen Rohren (9, 10, 11), durch die ein zentraler Kanal (12) und wenigstens ein Ringkanal (13, 14) für die Zufuhr eines sauerstoffhaltigen Gases und/oder eines Brennstoffes und/oder eines Schutzfluids gebildet werden, ein kolbenförmiger Körper (18, 18b) im zentralen Kanal verschiebbar angeordnet und mit einem Schubantrieb (17) verbunden ist.

14. Brenner bzw. Blasdüse nach Anspruch 13, dadurch gekennzeichnet, daß der oder die Ringkanäle (13, 14) an der Austrittsseite des Brenners (2, 2a, 2b) bzw. der Blasdüse in den zentralen Kanal (12) münden.

15. Anordnung eines Brenners bzw. einer Blasdüse nach einem der Ansprüche 1 bis 14 in der Wand (1) eines metallurgischen Ofens oberhalb des Schmelzspiegels mit einer sich an die Austrittsöffnung (8, 8c) des Brenners bzw. der Blasdüse anschließenden Wandöffnung (6), dadurch gekennzeichnet, daß die Wandöffnung (6) durch den verschiebbaren Körper (18, 18b, 18c) verschließbar ist.

16. Anordnung nach Anspruch 15, dadurch gekennzeichnet, daß der Wandbereich um die Wandöffnung (6) durch einen Wasserkühlkasten (3, 3c) gebildet ist.

17. Anordnung nach Anspruch 15 oder 16, dadurch gekennzeichnet, daß der Körper (18, 18b, 18c) bis über den inneren Rand der Wandöffnung (6) hinaus in den Ofeninnenraum verschiebbar ist.

18. Anordnung nach einem der Ansprüche 15 bis 17, dadurch gekennzeichnet, daß die Außenkontur im Bereich der Spitze des Brenners (18c) bzw. der Blasdüse der Innenkontur der Wandöffnung (6c) angepaßt ist.

0114070

1/3

FIG. 1

FIG. 2

FIG. 3

32   31  33          21a

18

30   34

2a

17

FIG. 4

18 b

41   40  34  42

2b

17

FIG. 5